# FASCICULE DE BREVET EUROPEEN

(11) **EP 0 511 119 B1**
(45) Date de publication et mention de la délivrance du brevet: **03.05.1995**
(21) Numéro de dépôt: 92401191.9
(22) Date de dépôt: 24.04.1992
(51) Int. Cl.: G01H 9/00, G01P 5/08, G01P 15/08

(54) **Capteur de vibrations à fibre optique et accéléromètre utilisant un tel capteur**
Fiberoptischer Schwingungsfühler und Beschleunigungsmesser mit Benutzung von solchem Fühler
Fibre optic vibration sensor and accelerometer using the same

(30) Priorité: 26.04.1991 FR 9105189
(43) Date de publication de la demande: 28.10.1992
(73) Titulaire: ALCATEL ALSTHOM COMPAGNIE GENERALE D'ELECTRICITE, 75382 Paris Cédex 08 (FR)
(72) Inventeur: Tardy, André, F-91520 Egly (FR); Derossis, Antoine, F-91460 Marcoussis (FR)
(74) Mandataire: Weinmiller, Jürgen

(56) Documents cités:
- EP-A- 0 151 958
- US-A- 4 801 799
- REVIEW OF SCIENTIFIC INSTRUMENTS, vol. 59, no. 11, 11 novembre 1988, New York, US, pages 2337-2340; D. RUGAR et al.: "Force microscope using a fiber-optic displacement sensor"'
- PATENT ABSTRACTS OF JAPAN vol. 9, no. 236 (P-390)(1959) 21 septembre 1985 & JP-A-60 091 210
- APPLIED OPTICS, vol. 28, no. 23, 1 décembre 1989, New York, US, pages 5158-5161; G. CONFORTI et al: "Fiber optic vibration sensor for remote monitoring in high power electric machines"

## Description

La présente invention concerne un capteur de vibrations à fibre optique utilisable en particulier dans un accéléromètre pour la surveillance des conditions vibratoires des équipements électrotechniques tels que des alternateurs, des bobines d'inductance shunt, etc.

Dans les applications à environnement perturbé, les systèmes à fibre optique présentent vis-à-vis des solutions classiques à capteur piézo-électrique, les avantages de ne pas être perturbés par les bruits de boucle de masse ou les interférences électromagnétiques.

Différents principes optiques ont été mis en oeuvre pour la détection des vibrations. La plupart des principes font intervenir une modulation d'amplitude de l'onde optique. Cette modulation d'amplitude peut être obtenue par variation de la puissance réfléchie par une cible et collectée par la fibre optique. L'accès à de très petits déplacements suppose des mesures précises de puissance optique compliquées par la nécessité de disposer d'une référence qui tient compte des variations accidentelles de flux lumineux le long de la ligne optique.

Une méthode pour augmenter les amplitudes vibratoires est d'utiliser un montage mécanique résonnant à une fréquence spécifiée. Il en résulte un système très spécifique, limité du point de vue réponse en fréquence, comme décrit dans l'article "Multimode Fiber-Optic Vibrometer" de G. CONFORTI et al, paru dans Springer Proceedings in Physics, Vol.44, P 194-199, 1989.

La modulation d'amplitude de l'onde optique peut aussi être obtenue par modulation de la biréfringence d'un matériau transparent. Cette modulation de polarisation est traduite généralement en modulation d'amplitude par l'intermédiaire d'un analyseur de polarisation et les difficultés de mesurage tiennent à la faible sensibilité des matériaux photo-élastiques aptes à présenter peu d'hystérésis et peu de sensibilité à la température. On peut se référer à cet égard à l'article de W.B. SPILLMAN Jr intitulé "Multimode Fiber-Optic accelerometer based on the photoelastic effect", paru dans la revue Applied Optics, Vol 21, n°15, p 2653-2654, 1/8/1982.

Un autre principe fait appel au vibromètre à effet Doppler. Pour accéder à de faibles fréquences vibratoires, la modulation de fréquence Doppler est transposée autour d'une fréquence porteuse générée par des dispositifs acousto-optiques volumineux et onéreux.

La mesure de vibrations peut encore s'effectuer à partir d'un interféromètre de Michelson modifié. Les déplacements de l'un des miroirs de l'interféromètre, placé sur l'objet vibrant, créent des variations d'état d'interférence qui sont enregistrées par un récepteur. Si l'on synchronise un compteur sur la fréquence de modulation, on peut donc connaître l'élongation obtenue à chaque période en comptant chaque fois le nombre de franges qui défilent.

Selon la présente invention, on propose d'utiliser un capteur de vibrations à fibre optique mettant en oeuvre un dispositif interférométrique simple permettant la mesure des accélérations vibratoires dans un domaine fréquentiel compris entre quelques Hz et quelques centaines de Hz. Un tel dispositif interférométrique est bien approprié à la mesure sans contact des déplacements dynamiques et en particulier des déplacements de pièces soumises à des mouvements vibratoires. Le comptage des franges d'interférence fournit un moyen simple d'accéder à la grandeur, l'échelon de quantification étant représenté par la longueur d'onde de la lumière.

Ce capteur de vibrations est bien adapté à la surveillance des conditions vibratoires des équipements électrotechniques puisque l'isolation électrique apportée par la fibre optique autorise des mesures sur des pièces sous tension ou dans un environnement électromagnétique perturbé.

L'invention a donc pour objet un capteur de vibrations de type interférométrique tel qu'il est par exemple divulgué par le document EP-A-0 151 958 et qui est caractérisé selon la revendication 1 en ce qu'il comprend un élément inertiel et des moyens permettant de véhiculer les composantes suivantes du même faisceau de lumière cohérente :
- une onde incidente vers l'élément inertiel,
- une onde réfléchie par l'élément inertiel vers un dispositif de traitement,
- une fraction dudit faisceau de lumière vers le dispositif de traitement.

L'invention a aussi pour objet un accéléromètre caractérisé en ce qu'il utilise comme détecteur un capteur de vibrations tel que défini ci-dessus, l'accélérateur disposant d'un dispositif de conversion des signaux lumineux transmis par le capteur en signaux électriques, un système électronique d'acquisition de données traitant ces signaux électriques pour délivrer l'accélération détectée par le capteur.

L'invention sera mieux comprise et d'autres avantages et particularités apparaîtront à la lecture de la description qui va suivre, donnée à titre non limitatif, accompagnée des dessins annexés parmi lesquels :
- la figure 1 représente une vue partielle d'un capteur de vibrations selon l'invention,
- les figures 2 à 4 représente une embase supportant un capteur de vibrations selon l'invention,
- la figure 5 représente le montage du capteur de vibrations sur son embase,
- la figure 6 représente une chaîne de mesure vibratoire pouvant être associée avec le capteur de vibrations,
- la figure 7 représente un système électronique d'acquisition de données utilisé dans la chaîne de mesure vibratoire.

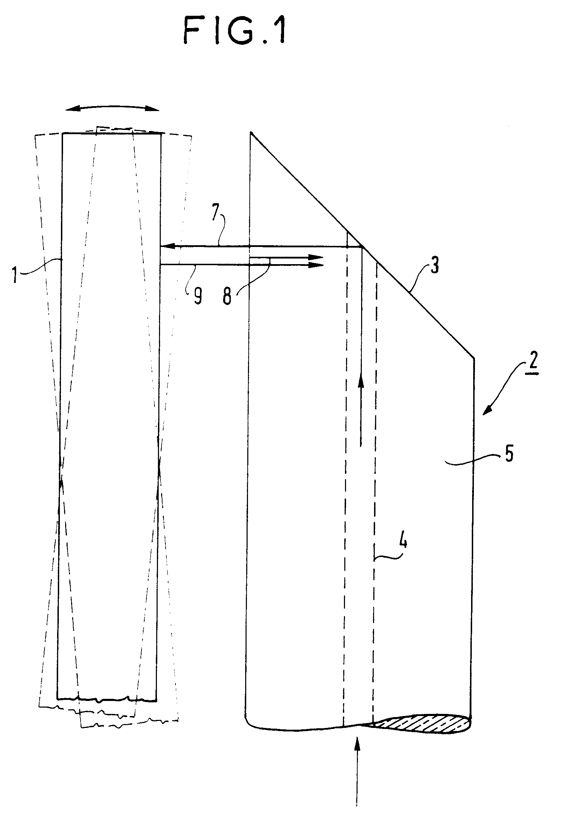

Le capteur de vibrations selon l'invention est avantageusement agencé comme le montre la figure 1. L'élément inertiel 1 est une poutre encastrée à l'une de ses extrémités, ou poutre en porte-à-faux. Il est formé par une lame vibrante qui est représentée dans sa position stable et, en traits interrompus, dans deux positions extrêmes de vibration. Afin de disposer d'un encombrement réduit, la fibre optique 2 est placée parallèlement à la lame vibrante 1. Son extrémité est biseautée à 45° par rapport à son axe et est polie pour constituer un miroir de renvoi 3.

Il est avantageux de prendre comme élément inertiel 1 une lame de verre. Le choix de ce matériau répond aux contraintes électromagnétiques d'environnement. Pour une accélération donnée, la flèche de la poutre sera égale à la flèche statique indépendamment de la fréquence vibratoire tant que cette fréquence reste très inférieure à la fréquence propre de la lame. La connaissance de la fréquence de vibration permet d'introduire un terme correctif pour les fréquences peu inférieures à la fréquence de résonance.

Sur la base d'une poutre vibrante en verre de densité 2,4 et de module d'élasticité 65 GPa, les caractéristiques dimensionnelles de la poutre peuvent être évaluées. Une épaisseur de 100 »m paraît être un bon compromis entre l'objectif de miniaturisation du dispositif et l'exigence de planéité des lames. La longueur hors encastrement des poutres s'en déduit. Pour une fréquence de résonance de la lame fo = 437 Hz, la longueur hors encastrement l est de 13,8 mm (fo étant calculée pour une accélération crête minimale détectable de 0,1 G, c'est-à-dire la présence de deux franges dans une période vibratoire). Pour fo = 418 Hz, l vaut 14,1 mm. Pour fo = 339 Hz, l vaut 15,7 mm. Il en découle qu'une faible variation de longueur libre des lames permet de s'adapter à la longueur d'onde de fonctionnement.

Pour disposer d'une sortie par fibre optique orthogonale aux directions vibratoires, une déviation de 90° de l'onde optique est nécessaire. La solution retenue est un polissage à 45° de l'extrémité de la fibre ce qui permet de bénéficier de la réflexion totale à l'interface verre-air. Le polissage peut être réalisé à l'aide d'un tampon présentant l'orientation requise vis-à-vis de l'axe de la fibre.

La fibre optique 2 comprend un coeur 4 entouré d'une gaine optique 5. Un faisceau lumineux 6 véhiculé parle coeur 4 de la fibre optique en direction de la face 3 se réfléchit totalement au travers de la gaine optique 5 vers la lame vibrante 1. A l'interface gaine optique-air le faisceau lumineux se divise. Une partie, la plus importante, est transmise vers la lame vibrante pour constituer une onde incidente 7 à l'élément inertiel. Une autre partie, la plus faible, est réfléchie à l'interface gaine optique-air pour constituer une fraction 8 du faisceau de lumière qui sera réfléchie totalement par le miroir 3 pour être véhiculée en sens inverse par la fibre optique. La lame vibrante renvoie également une onde réfléchie 9 vers le miroir 3. La gaine optique peut avoir un diamètre de 125 »m.

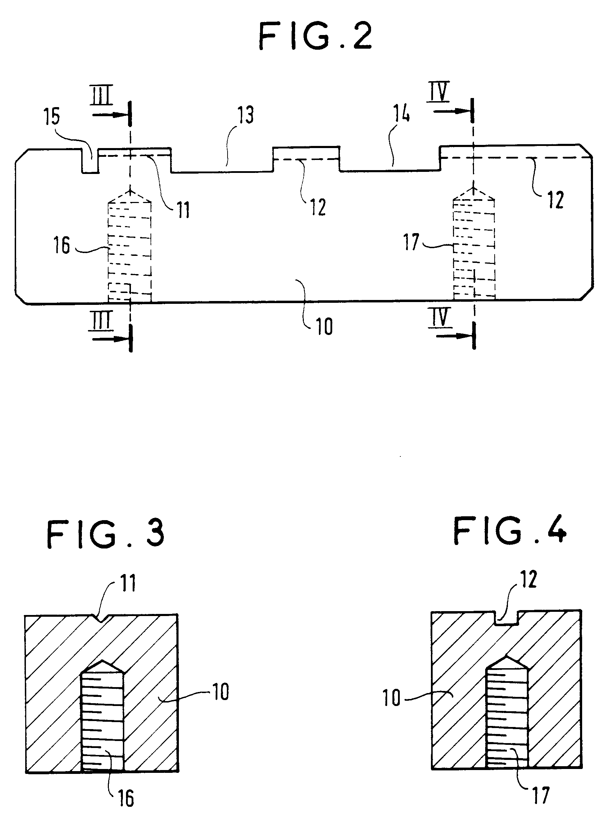

La fibre optique et la lame vibrante sont montées sur une embase telle que celle représentée par les figures 2 à 4. Les figures 3 et 4 sont des vues respectivement selon les coupes III-III et IV-IV de la figure 2.

L'embase 10 présente un V longitudinal 11 de positionnement de l'extrémité de la fibre optique, une rainure longitudinale 12 située dans l'alignement du V et des rainures transversales 13 et 14 jouant les rôles d'arrêt de colle et d'évent. Une fenêtre transversale 15 est également prévue à l'extrémité du V. L'extrémité de la fibre optique sera disposée au milieu de la fenêtre 15.

Les coupes III-III et IV-IV ont été effectuées selon les axes des trous filetés 16 et 17 servant à la fixation de l'embase 10 sur l'équipement à surveiller.

L'embase peut être en un alliage contenant 25 % de nickel, 65 % de cuivre et 8 % de zinc et connu sous le terme "Arcap". Cet alliage est facilement usinable et est amagnétique.

Le montage de la tête de mesure suppose l'orientation correcte du miroir constitué par l'extrémité de la fibre. Cette opération peut être effectuée à l'aide d'un miroir positionné en référence sur l'embase et en contrôlant la lumière rétro-réfléchie dans la fibre. La fibre peut être fixée par de la colle commercialisée sous la marque "Norland 61" et polymérisable aux rayonnements ultra-violets.

Cette colle est prévue pour une tenue en température entre -80 et + 90°C. La lame vibrante peut être également fixée par la même colle. Durant cette opération, une entretoise provisoire placée en extrémité de lame permet de garder le parallélisme entre l'embase et la lame. En fait, le parallélisme final est fonction de la planéité de la lame.

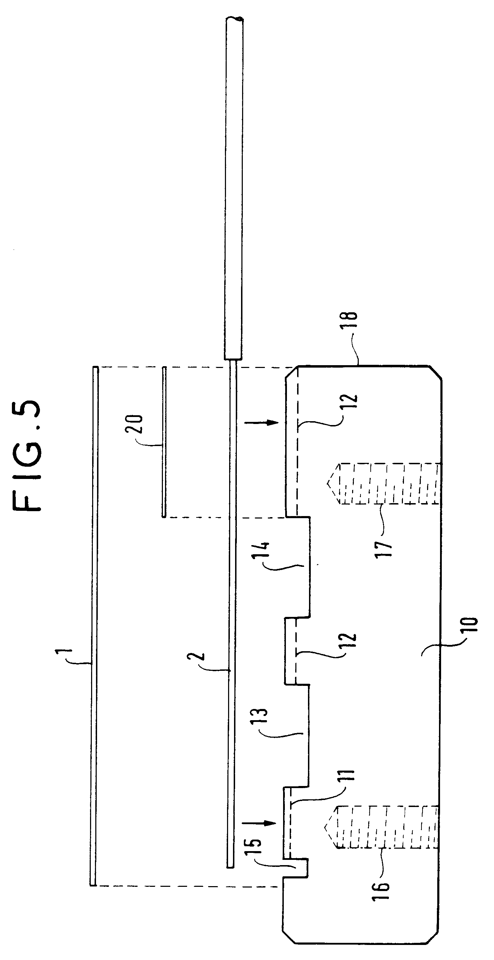

Le montage du capteur se fait comme le montre la figure 5. La fibre optique 2 est d'abord mise en place, puis l'entretoise 20 et ensuite la lame vibrante 1. La fibre optique est collée dans la partie du V située entre la fenêtre 15 et la rainure 13. L'ensemble fibre optique-entretoise 20-lame vibrante est collé sur la partie de l'embase située entre la rainure 14 et l'extrémité arrière 18 de l'embase. L'entretoise 20 peut être une lame de verre de 50 »m d'épaisseur.

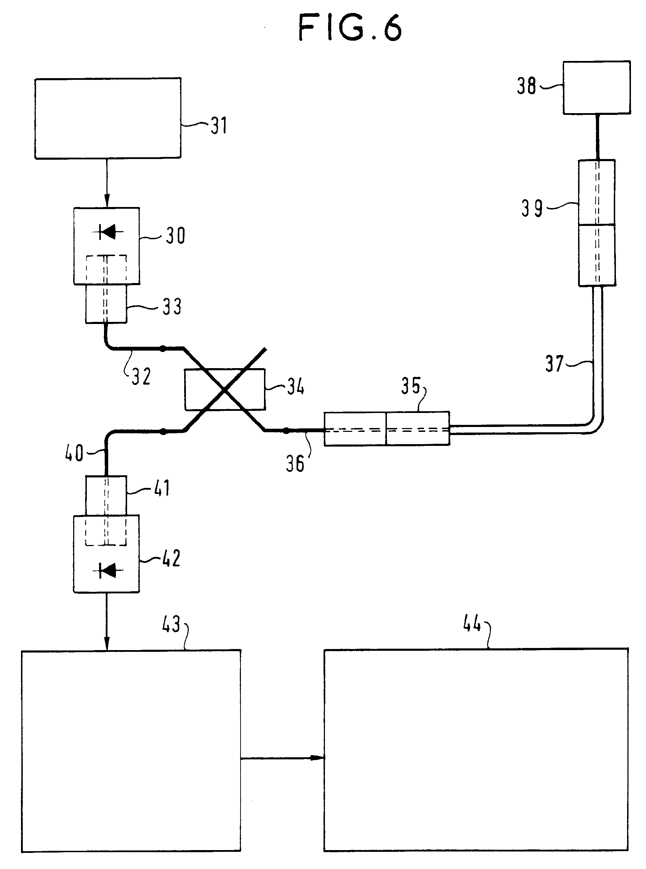

Une chaîne de mesure vibratoire pouvant être associée au capteur de vibrations selon l'invention est représentée à la figure 6. Le faisceau de lumière envoyé vers le capteur est généré par une diode laser connectorisée 30 alimentée par une alimentation à courant constant 31. Une fibre optique 32 sortant du connecteur 33 de la diode transmet le faisceau lumineux vers un coupleur 34 qui le dirige vers le connecteur 35 grâce à la fibre optique 36. A la sortie du connecteur 35, un câble optique 37 transmet le faisceau lumineux vers le capteur de vibrations 38 grâce au connecteur 39. Les signaux lumineux renvoyés sont dirigés par le coupleur 34, la fibre optique 40 et le connecteur 41 vers une photodiode connectorisée 42. Le signal délivré par la photodiode 42 est amplifié par l'amplificateur 43 et transmis au système électronique d'acquisition des données 44.

Le déplacement de l'élément inertiel se traduit par la variation de distance entre les faces d'une cavité constituée d'une part par l'extrémité de la fibre, d'autre part par la lame vibrante. L'interféromètre se comporte comme un générateur incrémental.

Le signal optique qui représente l'accélération vibratoire est constitué par un train d'impulsions. L'accélération est proportionnelle au nombre de périodes contenues dans la modulation optique à l'intérieur d'une période vibratoire ou d'un temps multiple de cette période. Le comptage peut porter sur les passages à zéro du signal. La détection de la fréquence vibratoire est moins immédiate. Cependant, dans une période vibratoire, la modulation optique évolue en fréquence concomitamment avec la vitesse de la lame. Par filtrage et démodulation, il est possible d'accéder à la fréquence vibratoire. Accélération et fréquence sont donc les deux informations fournies par la chaîne de mesure.

Deux grandeurs doivent être extraites : le nombre de franges et la fréquence vibratoire. La difficulté porte sur la détection de la fréquence vibratoire prépondérante, a priori inconnue et accompagnée d'autres composantes spectrales supposées d'amplitude plus faible.

La modulation (franges) du signal optique peut être considérée comme une porteuse dont la fréquence évolue périodiquement à la fréquence double de celle de la vibration.

On fait passer le signal électrique représentatif du signal optique dans un filtre passe-haut de manière qu'en privilégiant les hautes fréquences, des signaux de durée finie au double de la fréquence vibratoire soient obtenus.

Pour tenir compte des différents spectres possibles liés aux paramètres vibratoires, la fréquence du filtre est asservie à une valeur qui résulte de la moyenne temporelle sur 256 franges consécutives.

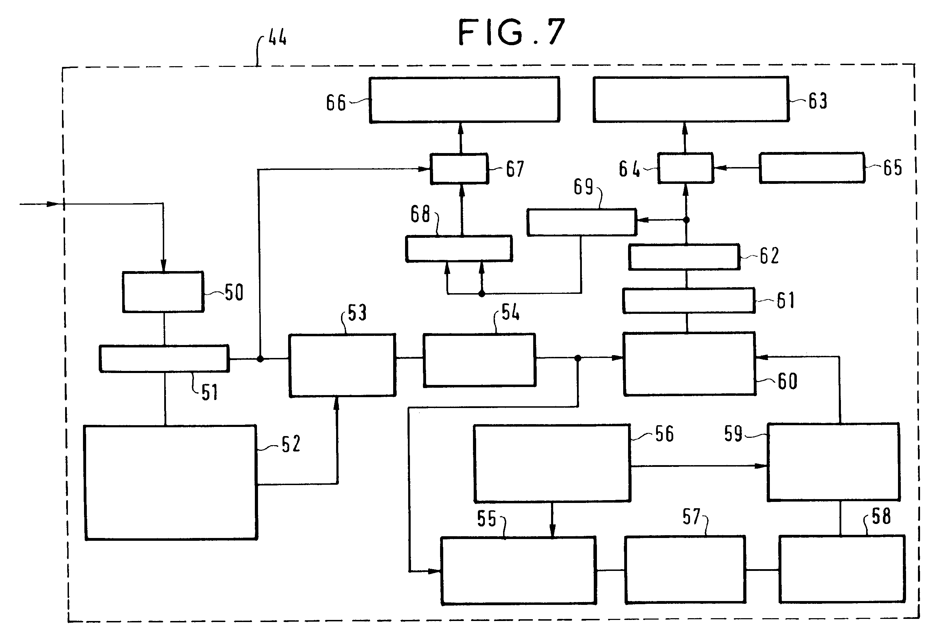

Le système électronique d'acquisition des données représenté à la figure 7 est destiné à détecter des accélérations vibratoires dans une bande de fréquence allant de 25 à 250 Hz. Après photodétection et amplification, la bande passante du signal est limitée côté basse fréquence par un filtre passe-haut 50 transmettant les signaux de fréquence supérieure à 25 Hz. On élimine ainsi les composantes continues. Le signal est alors mis en forme par le circuit de mise en forme 51 afin d'éliminer la modulation d'amplitude existant sur le signal. Après mise en forme, une première voie d'acquisition permet le comptage des franges et une seconde voie sert à la détection de fréquence.

Le circuit 52 permet de détecter la fréquence moyenne du signal. Il s'agit d'une moyenne temporelle effectuée sur 256 franges. Le signal sortant du circuit 52 est envoyé à un filtre passe-haut 53 asservi à la fréquence moyenne détectée. Il s'agit par exemple d'un filtre à capacités commutées. A la sortie du filtre 53 on ne conserve que les composantes les plus élevées pour faire apparaître le double de la fréquence vibratoire. Le circuit 54 placé à la sortie du filtre 53 est un démodulateur qui restitue les harmoniques deux des fréquences vibratoires. La détection de la vibration prépondérante intervient par un balayage spectral entre 50 et 500 Hz à l'aide d'un filtre passe-bande 55 du type à capacités commutées et dont la fréquence centrale est pilotée par une horloge 56 de fréquence comprise entre 2,5 et 25 kHz et dont la variation de fréquence est réalisée par incrément de la période correspondante. En sortie du filtre 55 est disposé un circuit 57 de mesure des valeurs crêtes. Le circuit 58, placé en sortie du circuit 57, assure la sélection de la valeur crête la plus grande et le circuit 59 la mise en mémoire de la fréquence d'horloge correspondant à la valeur crête la plus grande.

Grâce à ces circuits, les amplitudes crêtes sont comparées deux à deux avec conservation de l'amplitude la plus grande, l'analyse pouvant être effectuée sur une durée d'une seconde. La fréquence d'horloge mémorisée par le circuit 59, et correspondant à la valeur la plus grande, permet le pilotage d'un filtre passe-bande 60 du type à capacités commutées qui sélectionne dans le signal issu du démodulateur 54 la composante vibratoire prépondérante. Après mise en forme par un circuit 61, un diviseur par deux 62 restitue la fréquence vibratoire. Cette fréquence vibratoire est mesurée par comptage, grâce au compteur 63, du nombre de périodes de la fréquence inconnue pendant un temps constant prédéterminé de 1 seconde, temps imposé par la porte 64 commandée par le circuit de commande de porte 65.

La seconde voie d'acquisition comprend un compteur 66 qui permet le comptage des franges dans un temps correspondant à 10 périodes vibratoires. Ce comptage se fait au travers d'une porte 67 commandée par un circuit de commande de porte 68, le comptage s'effectuant pendant une durée égale à 10 fois la période du signal issu du diviseur 62 grâce au diviseur par dix 69.

Les informations délivrées par les compteurs 63 et 66 sont fournies à un calculateur. En ayant auparavant étalonné l'accéléromètre, on connaît le nombre de franges correspondant à une accélération vibratoire donnée. Le calculateur délivre alors directement l'accélération.

Ce type d'accéléromètre peut être avantageusement utilisé dans les applications suivantes :
- la surveillance des conditions vibratoires des têtes de bobines de stator d'alternateur de puissance avec pour intérêt principal le contrôle permanent des système de calage réalisés côté turbine et côté bagues,
- la surveillance des bobines d'inductance shunt à très haute tension où des résonances mécaniques peuvent apparaître dans le système constitué par les galettes de noyau magnétique, les culasses et les isolants d'entrefer,
- la surveillance des moteurs de puissance.

## Revendications

1. Capteur de vibrations de type interférométrique, comprenant un élément inertiel (1) et une fibre optique permettant de véhiculer les composantes suivantes du même faisceau de lumière cohérente :
- une onde incidente (7) vers l'élément inertiel,
- une onde réfléchie (9) par l'élément inertiel vers un dispositif de traitement,
caractérisé en ce que la fibre optique (2) possède une extrémité libre disposée parallèlement à l'élément inertiel (1), cette extrémité libre étant biseautée (3) et traitée pour renvoyer l'onde incidente (7) vers l'élément inertiel au travers de la gaine optique (5) de la fibre, une première partie de l'onde incidente (7) traversant la paroi de la fibre pour se réfléchir sur l'élément inertiel (1) et constituer ladite onde réfléchie (9), cette onde réfléchie retournant dans la fibre et étant renvoyée par l'extrémité biseautée (3) pour être véhiculée par la fibre optique vers le dispositif de traitement, une seconde partie de l'onde incidente étant renvoyée par la paroi de la fibre pour être véhiculée par la fibre optique vers le dispositif de traitement.

2. Capteur de vibrations selon la revendication 1, caractérisé en ce que l'élément inertiel (1) est une lame de verre en porte-à-faux.

3. Accéléromètre utilisant comme détecteur un capteur de vibrations (38) selon la revendication 1, disposant d'un dispositif de conversion (42) des signaux lumineux transmis par le capteur en signaux électriques, un système électronique d'acquisition de données (44) traitant ces signaux électriques pour délivrer l'accélération détectée par le capteur (38).

4. Accéléromètre selon la revendication 3, caractérisé en ce que le système électronique d'acquisition de données comprend des moyens de comptage des franges d'interférence fournies par la combinaison de l'onde réfléchie (9) par l'élément inertiel (1) et de la fraction (8) dudit faisceau de lumière.

5. Accéléromètre selon la revendication 4, caractérisé en ce que le système électronique d'acquisition des données comprend également des moyens de mesure de la fréquence de la vibration d'amplitude la plus grande.

## Patentansprüche

1. Schwingungssensor vom interferometrischen Typ, der ein Trägheitselement (1) und eine Lichtfaser aufweist, die es ermöglicht, die folgenden Komponenten des gleichen Strahls von kohärentem Licht zu übertragen:
- eine einfallende Welle (7), die auf das Trägheitselement trifft,
- eine vom Trägheitselement zu einer Verarbeitungsvorrichtung reflektierte Welle (9),
dadurch gekennzeichnet, daß die Lichtfaser (2) ein freies Ende aufweist, das parallel zum Trägheitselement (1) angeordnet ist, wobei dieses freie Ende (3) abgeschrägt und so bearbeitet ist, daß die einfallende Welle (7) zum Trägheitselement durch die optische Umhüllung (5) der Faser gelenkt wird, wobei ein erster Teil der einfallenden Welle (7) die Wand der Faser durchquert und auf dem Trägheitselement (1) reflektiert wird und die reflektierte Welle (9) bildet, wobei diese reflektierte Welle in die Faser zurückkehrt und vom abgeschrägten Ende (3) umgelenkt wird, um von der Lichtfaser zur Verarbeitungsvorrichtung übertragen zu werden, während ein zweiter Teil der einfallenden Welle von der Wand der Faser reflektiert wird, um von der Lichtfaser zur Verarbeitungsvorrichtung übertragen zu werden.

2. Schwingungssensor nach Anspruch 1, dadurch gekennzeichnet, daß das Trägheitselement (1) eine fliegend gelagerte Glaslamelle ist.

3. Beschleunigungsmesser, der als Detektor einen Schwingungssensor (38) gemäß Anspruch 1 verwendet und über eine Umwandlungsvorrichtung (42) der vom Sensor übertragenen Lichtsignale in elektrische Signale verfügt, wobei ein elektronisches Datenerfassungssystem (44) diese elektrischen Signale verarbeitet, um die vom Sensor (38) erfaßte Beschleunigung zu liefern.

4. Beschleunigungsmesser nach Anspruch 3, dadurch gekennzeichnet, daß das elektronische Datenerfassungssystem Mittel zum Zählen der Interferenzstreifen enthält, die von der Kombination der vom Trägheitselement (1) reflektierten Welle (9) und dem Teil (8) der einfallenden Lichtwelle geliefert werden.

5. Beschleunigungsmesser nach Anspruch 4, dadurch gekennzeichnet, daß das elektronische Datenerfassungssystem außerdem Mittel zur Messung der Frequenz der stärksten Amplitudenschwingung aufweist.

## Claims

1. Interferometer type vibration sensor including an inertial member (1) and an optical fibre for conveying the following components of the same coherent light beam:
- an incident wave (7) towards the inertial member,
- a wave (9) reflected by the inertial member towards a processor device,
characterised in that the optical fibre (2) has a free end parallel to the inertial member (1), said free end (3) being bevelled and treated to reflect the incident wave (7) towards the inertial member through the optical cladding (5) of the fibre, a first part of the incident wave (7) passing through the wall of the fibre to be reflected from the inertial member (1) and constitute said reflected wave (9), said reflected wave returning into the fibre and being reflected from the bevelled end (3) to be conveyed by the optical fibre to the processor device, a second part of the incident wave being reflected by the wall of the fibre to be conveyed by the optical fibre to the processor device.

2. Vibration sensor according to claim 1 characterised in that the inertial member (1) is a cantilever glass beam.

3. Accelerometer using a vibration sensor (38) according to claim 1 as a sensor and having a device (42) for converting light signals transmitted by the sensor into electrical signals, an electronic data acquisition system (44) processing said electrical signals to output the acceleration detected by the sensor (38).

4. Accelerometer according to claim 3 characterised in that the electronic data acquisition system includes means for counting interference fringes produced by combination of the wave (9) reflected from the inertial member (1) and the fraction (8) of said light beam.

5. Accelerometer according to claim 4 characterised in that the electronic data acquisition system also includes means for measuring the frequency of the vibration of greatest amplitude.
